# EUROPEAN PATENT SPECIFICATION

(11) **EP 2 367 862 B1**
(45) Date of publication and mention of the grant of the patent: **23.01.2013**
(21) Application number: 09775079.8
(22) Date of filing: 22.12.2009
(51) Int. Cl.: C08F 14/26

(54) **AQUEOUS POLYMERIZATION OF FLUORINATED MONOMER USING HYDROGEN CONTAINING BRANCHED FLUOROETHER SURFACTANT**
WÄSSRIGE POLYMERISATION VON FLUORMONOMER UNTER VERWENDUNG VON WASSERSTOFFHALTIGEM VERZWEIGTEM FLUORETHERTENSID
POLYMÉRISATION AQUEUSE DE MONOMÈRE FLUORÉ À L'AIDE D'UN TENSIO-ACTIF ÉTHER FLUORÉ RAMIFIÉ À BASE D'HYDROGÈNE

(30) Priority: 23.12.2008 US 140206 P
(43) Date of publication of application: 28.09.2011
(73) Proprietor: E. I. du Pont de Nemours and Company, Wilmington, DE 19898 (US)
(72) Inventor: LARICHEV, Roman, B., Wilmington Delaware 19880-0402 (US)
(74) Representative: Matthews, Derek Peter
(86) International application number: PCT/US2009/069158
(87) International publication number: WO 2010/075362

(56) References cited:
- EP-A2- 0 822 175
- WO-A1-2005/121290
- WO-A1-2008/099873
- WO-A1-2009/137736
- JP-A- 2005 036 002
- US-A1- 2007 015 864

## Description

### FIELD OF THE INVENTION

This invention relates to a process for the dispersion polymerization of fluorinated monomer in an aqueous polymerization medium using hydrogen-containing branched fluoroether surfactants.

### BACKGROUND

A typical process for the aqueous dispersion polymerization of fluorinated monomer includes feeding fluorinated monomer to a heated reactor containing a fluorosurfactant and deionized water. Paraffin wax is employed in the reactor as a stabilizer for some polymerizations, e.g., polytetrafluoroethylene (PTFE) homopolymers. A free-radical initiator solution is employed and, as the polymerization proceeds, additional fluorinated monomer is added to maintain the pressure. A chain transfer agent is employed in the polymerization of some polymers, e.g., melt-processible TFE copolymers to control melt viscosity. After several hours, the feeds are stopped, the reactor is vented and purged with nitrogen, and the raw dispersion in the vessel is transferred to a cooling vessel.
For use in fluoropolymer coatings for metals, glass and fabric, polymer dispersion is typically transferred to a dispersion concentration operation which produces stabilized dispersions used as coatings. Certain grades of PTFE dispersion are made for the production of fine powder. For this use, the dispersion is coagulated, the aqueous medium is removed and the PTFE is dried to produce fine powder. Dispersions of melt-processible fluoropolymers for molding resin use are also coagulated and the coagulated polymer dried and then processed into a convenient form such as flake, chip or pellet for use in subsequent melt-processing operations. Successful production of the high solids fluoropolymer dispersion generally requires the presence of a surfactant in order to stabilize the dispersion preventing coagulation of the fluoropolymer particles.

Fluorosurfactants used in the polymerization are usually anionic, non-telogenic, soluble in water and stable to reaction conditions. The most widely used fluorosurfactants are perfluoroalkane carboxylic acids and salts as disclosed in U.S. Patent 2,559,752 to Berry, specifically perfluorooctanoic acid and salts, often referred to as C8, and perfluorononanoic acid and salts, often referred to as C9. Because of recent environmental concerns with regard to perfluorooctanoic acid and salts, there is interest in reducing or eliminating perfluorooctanoic acid and its salts in fluoropolymer polymerization processes.

Fluorinated surfactants that are not perfluorinated have been used as the dispersing agent in the aqueous dispersion polymerization of fluorinated monomer. When the perfluoroalkyl group of the prior art is replaced by a partially fluorinated group containing hydrogen atoms, it is desirable that said hydrogen atoms not undergo chain transfer to such an extent that they reduce the rate of initiation or cause the polymerization once initiated to proceed at a low rate. For example Japanese patent application 3900883B discloses the use of H(CF₂CF₂)₂CH₂OCF(CF₃)COONH₄ for the polymerization of tetrafluoroethylene (TFE), and the copolymerization of TFE with other fluorine containing monomers. It is also desirable that hydrogen containing surfactants used for aqueous polymerization of fluorinated monomers efficiently disperse the fluorinated polymer so that the polymerization may proceed to a high solids level while producing a raw particle size dispersion (RDPS) within a desirable range.

### SUMMARY OF THE INVENTION

This invention provides a process comprising polymerizing at least one fluorinated monomer in an aqueous medium containing initiator and fluorosurfactant having the formula (I)

R_{f}CH₂OCF(CF₃)C(O)OM (I)

wherein R_{f} is a linear or branched perfluoroalkyl group with 2 to 5 carbon atoms, and M is H, NH₄, Li, Na, or K.

### DETAILED DESCRIPTION

Disclosed within are hydrogen-containing branched fluoroether surfactants that provide effective polymerization agents for use in the manufacture of fluoropolymers. Despite the presence of hydrogen in the partially fluorinated surfactant, the process of this invention gives fast initiation of polymerization and a high rate of polymerization. Furthermore, this process allows the preparation of a polymer emulsion with a high solids content and raw particle size dispersion within a desirable range. The process comprises polymerizing at least one fluorinated monomer in an aqueous medium containing initiator and polymerization agent to form an aqueous dispersion of particles of fluoropolymer, the polymerization agent comprising formula (I)

R_{f}CH₂OCF(CF₃)C(O)OM (I)

wherein R_{f} is a linear or branched perfluoroalkyl group with 2 to 5 carbon atoms, and M is H, NH₄, Li, Na, or K. Preferably R_{f} is a linear perfluoroalkyl group with 2 to 5 carbon atoms, most preferably a linear perfluoroalkyl group with 3 to 5 carbon atoms. The process of the current invention using surfactant (I) is better than a polymerization process of the prior art using surfactants which have a hydrogen in place of one fluorine on the terminal carbon. As shown in the examples below, a polymerization with surfactant (I) which has a CF₃- end group has a shorter initiation time, a faster polymerization rate, and a lower raw dispersion particle size than a polymerization using a surfactant with a HCF₂- end group in place of the - CF₃- end group.

When M = NH₄, the compounds of Formula (I) can be prepared via the following reaction scheme:

R_{f}CH₂OH + NaH → R_{f}CH₂ONa

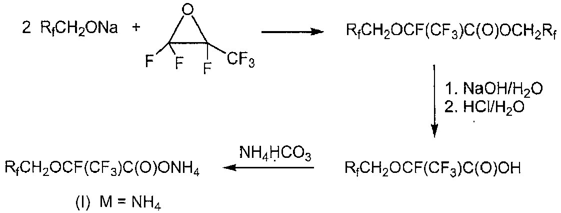

The compounds of Formula (I) where M = Li, Na or K can be prepared in similar fashion by reaction of the acid with the appropriate metal hydroxide or metal carbonate.

Fluoropolymer dispersions formed by the polymerization process are comprised of particles of fluoropolymer made from at least one fluorinated monomer, i.e., wherein at least one of the monomers contains fluorine, preferably an olefinic monomer with at least one fluorine or a perfluoroalkyl group attached to a doubly-bonded carbon. A combination of monomers may be used. The fluorinated monomer used in the process of this invention can be selected from the group consisting of tetrafluoroethylene (TFE), hexafluoropropylene (HFP), chlorotrifluoroethylene (CTFE), trifluoroethylene, hexafluoroisobutylene, perfluoroalkyl ethylene, fluorovinyl ethers, vinyl fluoride (VF), vinylidene fluoride (VF2), perfluoro-2,2-dimethyl-1,3-dioxole (PDD), perfluoro-2-methylene-4-methyl-1,3-dioxolane (PMD), perfluoro(allyl vinyl ether) and perfluoro(butenyl vinyl ether), or a combination thereof. A typical perfluoroalkyl ethylene monomer is perfluorobutyl ethylene (PFBE). Typical fluorovinyl ethers include perfluoro(alkyl vinyl ether) monomers (PAVE) such as perfluoro(propyl vinyl ether) (PPVE), perfluoro(ethyl vinyl ether) (PEVE), and perfluoro(methyl vinyl ether) (PMVE). Non-fluorinated olefinic comonomers such as ethylene and propylene can optionally be copolymerized with the fluorinated monomers.

Other typical fluorovinyl ethers include those useful for introducing functionality into fluoropolymers. These include CF₂=CF-(O-CF₂CFR_{f})ₐ-O-CF₂CFR'_{f}SO₂F, wherein R_{f} and R'_{f} are independently selected from F, Cl or a perfluorinated alkyl group having 1 to 10 carbon atoms, a = 0, 1 or 2. Polymers of this type are disclosed in U.S. Patent No. 3,282,875 (CF₂=CF-O-CF₂CF(CF₃)-O-CF₂CF₂SO₂F, perfluoro(3,6-dioxa-4-methyl-7-octenesulfonyl fluoride)), and in U.S. Patent Nos. 4,358,545 and 4,940,525 (CF₂=CF-O-CF₂CF₂SO₂F). Another example is CF₂=CF-O-CF₂- CF(CF₃)-O-CF₂CF₂CO₂CH₃, methyl ester of perfluoro(4,7-dioxa-5-methyl-8-nonenecarboxylic acid), disclosed in U.S. Patent No. 4,552,631. Similar fluorovinyl ethers with functionality of nitrile, cyanate, carbamate, and phosphorus-containing functional groups are disclosed in U.S. Patent Nos. 5,637,748; 6,300,445; and 6,177,196.

The process is especially useful when producing dispersions of polytetrafluoroethylene (PTFE) including modified PTFE. PTFE and modified PTFE typically have a melt creep viscosity of at least about 1x10⁸ Pa·s and, with such high melt viscosity, the polymer does not flow significantly in the molten state and therefore is not a melt-processible polymer. Polytetrafluoroethylene (PTFE) refers to the polymerized tetrafluoroethylene by itself without any significant comonomer present. Modified PTFE refers to copolymers of TFE with such small concentrations of comonomer that the melting point of the resultant polymer is not substantially reduced below that of PTFE. The concentration of such comonomer is preferably less than 1 wt%, more preferably less than 0.5 wt%. A minimum amount of at least about 0.05 wt% is preferably used to have significant effect. The modified PTFE contains a small amount of comonomer modifier which improves film forming capability during baking (fusing), such as perfluoroolefin, notably hexafluoropropylene (HFP) or perfluoro(alkyl vinyl ether) (PAVE), where the alkyl group contains 1 to 5 carbon atoms, with perfluoro(ethyl vinyl ether) (PEVE) and perfluoro(propyl vinyl ether) (PPVE) being preferred. Chlorotrifluoroethylene (CTFE), perfluorobutyl ethylene (PFBE), or other monomers that introduces bulky side groups into the molecule are also included.

The process is especially useful when producing dispersions of melt-processible fluoropolymers. By melt-processible, it is meant that the polymer can be processed in the molten state (i.e., fabricated from the melt into shaped articles such as films, fibers, and tubes that exhibit sufficient strength and toughness to be useful for their intended purpose) using conventional processing equipment such as extruders and injection molding machines. Examples of such melt-processible fluoropolymers include homopolymers such as polychlorotrifluoroethylene or copolymers of tetrafluoroethylene (TFE) and at least one fluorinated copolymerizable monomer (comonomer) present in the polymer usually in sufficient amount to reduce the melting point of the copolymer substantially below that of TFE homopolymer, polytetrafluoroethylene (PTFE), e.g., to a melting temperature no greater than 315°C.

A melt-processible TFE copolymer typically incorporates an amount of comonomer into the copolymer in order to provide a copolymer which has a melt flow rate (MFR) of 1-100 g/10 min as measured according to ASTM D-1238 at the temperature which is standard for the specific copolymer. Preferably, the melt viscosity is at least about 10² Pa·s, more preferably, will range from 10² Pa·s to 10⁶ Pa·s, most preferably 10³ to 10⁵ Pa·s measured at 372°C by the method of ASTM D-1238 modified as described in U.S. Patent 4,380,618. Additional melt-processible fluoropolymers are the copolymers of ethylene (E) or propylene (P) with TFE or CTFE, notably ETFE, ECTFE and PCTFE.

A typical melt-processible copolymer for use in the practice of the present process comprises at least 40-98 mol% tetrafluoroethylene units and 2-60 mol% of at least one other monomer. Typical comonomers with TFE are perfluoroolefin having 3 to 8 carbon atoms, such as hexafluoropropylene (HFP), and/or perfluoro(alkyl vinyl ether) (PAVE) in which the linear or branched alkyl group contains 1 to 5 carbon atoms. Typical PAVE monomers are those in which the alkyl group contains 1, 2, 3 or 4 carbon atoms, and the copolymer can be made using several PAVE monomers. Typical perfluoropolymers are TFE/HFP copolymer in which the HFP content is 9-17 wt%, more preferably TFE/HFP/PAVE such as PEVE or PPVE, wherein the HFP content is 9-17 wt% and the PAVE content, preferably PEVE, is 0.2 to 3 wt%, to total 100 wt% for the copolymer.

Further useful polymers are film forming polymers of polyvinylidene fluoride (PVDF) and copolymers of vinylidene fluoride as well as polyvinyl fluoride (PVF) and copolymers of vinyl fluoride.

The process is also useful when producing dispersions of fluorocarbon elastomers. These elastomers typically have a glass transition temperature below 25°C and exhibit little or no crystallinity at room temperature. By crystalline is meant that the polymers have some crystallinity and are characterized by a detectable melting point measured according to ASTM D 3418, and a melting endotherm of at least about 3 J/g. Melt-processible polymers that are not crystalline according to the preceding definition are amorphous.

Fluorocarbon elastomer copolymers made by the process typically contain 25 to 70 wt%, based on total weight of the fluorocarbon elastomer, of copolymerized units of a first fluorinated monomer which may be vinylidene fluoride (VF2) or tetrafluoroethylene (TFE). The remaining units in the fluorocarbon elastomers are comprised of one or more additional copolymerized monomers, different from said first monomer, selected from the group consisting of fluorinated monomers, hydrocarbon olefins and mixtures thereof. Fluorocarbon elastomers prepared by the process may also, optionally, comprise units of one or more cure site monomers. When present, copolymerized cure site monomers are typically at a level of 0.05 to 7 wt%, based on total weight of fluorocarbon elastomer. Examples of suitable cure site monomers include: i) bromine -, iodine -, or chlorine - containing fluorinated olefins or fluorinated vinyl ethers; ii) nitrile group-containing fluorinated olefins or fluorinated vinyl ethers; iii) perfluoro(2-phenoxypropyl vinyl ether); and iv) non-conjugated dienes.

Typical TFE based fluorocarbon elastomer copolymers include TFE/PMVE, TFE/PMVE/E, TFE/P and TFE/P/VF2. Preferred VF2 based fluorocarbon elastomer copolymers include VF2/HFP, VF2/HFP/TFE, and VF2/PMVE/TFE. Any of these elastomer copolymers may further comprise units of cure site monomer.

The process can be carried out as a batch process in a pressured reactor. Suitable vertical or horizontal reactors for carrying out the process are equipped with stirrers for the aqueous medium to provide sufficient contact of gas phase monomers such as TFE for desirable reaction rates and uniform incorporation of comonomers if employed. The reactor typically includes a cooling jacket surrounding the reactor so that the reaction temperature may be conveniently controlled by circulation of a controlled temperature heat exchange medium.

In a typical process, the reactor is first charged with deionized and deaerated water of the polymerization medium and fluorosurfactant is dispersed in the medium. The reactor can be optionally purged at least once with nitrogen and/or gaseous monomer to reduce oxygen content. For PTFE homopolymer and modified PTFE, paraffin wax as stabilizer is often added. A suitable procedure for PTFE homopolymer and modified PTFE includes first pressurizing the reactor with TFE. If used, the comonomer such as HFP or perfluoro (alkyl vinyl ether) is then added. A initiator solution, typically a free-radical initiator such as ammonium persulfate solution is then added. For PTFE homopolymer and modified PTFE, a second initiator which is a source of succinic acid such as disuccinyl peroxide may be present in the initiator solution to reduce coagulum. Alternatively, a redox initiator system such as potassium permanganate/oxalic acid is used. The temperature is increased and, once polymerization begins, additional TFE is added to maintain the pressure. The beginning of polymerization is referred to as kick-off and is defined as the point at which gaseous monomer feed pressure is observed to drop substantially, for example, about 10 psi (about 70 kPa). Comonomer and/or chain transfer agent can also be added as the polymerization proceeds. For some polymerizations, additional monomers, initiator and or polymerization agent may be added during the polymerization.

Batch dispersion polymerizations can be described as proceeding in two phases. The initial period of the reaction can be said to be a nucleation phase during which a given number particles are established. Subsequently, it can be said that a growth phase occurs in which the predominant action is polymerization of monomer on established particles with little or no formation of new particles. The transition from the nucleation to the growth phase of polymerization occurs smoothly, typically between the 4 and the 10 percent solids in for the polymerization of TFE. The final raw dispersion particle size (RDPS) of the TFE polymer particles is typically in the range 50-350 nm. The amount of surfactant (I) of this invention used is effective to achieve the dispersion of polymer particles and preferably the preferred particle size within the range recited above.

After batch completion (typically several hours) when the desired amount of polymer or solids content has been achieved, the feeds are stopped, the reactor is vented and purged with nitrogen, and the raw dispersion in the vessel is transferred to a cooling vessel.

The solids content of the dispersion upon completion of polymerization can be varied depending upon the intended use for the dispersion. For example, the process described herein can be employed to produce a "seed" dispersion with low solids content, e.g., less than 10%, which is employed as "seed" for a subsequent polymerization process to a higher solids level. The process described herein can also be employed to produce fluoropolymer dispersion with a solids content of at least about 10 wt%, or more typically at least about 15%.

In one embodiment of the process, the polymerization produces less that about 25 wt%, and or less than 10 wt% undispersed fluoropolymer (coagulum) based on the total weight of fluoropolymer produced.

The as-polymerized dispersion can be stabilized with anionic, cationic, or nonionic surfactant for certain uses. Typically however, the as-polymerized dispersion is transferred to a dispersion concentration operation which produces concentrated dispersions stabilized typically with nonionic surfactants by known methods. Aromatic alcohol ethoxylates as taught in Marks et al., U.S. Patent 3,037,953, and in Holmes, U. S. Patent 3,704,272 can be used as stabilizers. Aliphatic alcohol ethoxylates such as those disclosed in Marks et al., U.S. Patent 3,037,953 and Miura et al., U.S. 6,153,688 are preferably used in concentrated dispersions stabilized with nonionic surfactants. Particularly preferred nonionic surfactants are a compound or mixture of compounds of the formula:

R(OCH₂CH₂)ₙOH

wherein R is a branched alkyl, branched alkenyl, cycloalkyl, or cycloalkenyl hydrocarbon group having 8-18 carbon atoms and n is an average value of 5 to 18 as disclosed in Cavanaugh EP 1472307 A1. The stabilized dispersion preferably contains 2-11 wt% nonionic surfactant based on the weight of fluoropolymer solids in the dispersion. Solids content of the concentrated dispersion is typically 35 to 70 wt%.

Certain grades of PTFE dispersion are made for the production of fine powder. For this use, the dispersion is coagulated, the aqueous medium is removed and the PTFE is dried to produce fine powder.

The dispersion polymerization of melt-processible copolymers is similar except that comonomer in significant quantity is added to the batch initially and/or introduced during polymerization. Chain transfer agents are typically used in significant amounts to decrease molecular weight to increase melt flow rate. The same dispersion concentration operation can be used to produce stabilized concentrated dispersions. Alternatively, for melt-processible fluoropolymers used as molding resin, the dispersion is coagulated and the aqueous medium is removed. The fluoropolymer is dried then processed into a convenient form such as flake, chip or pellet for use in subsequent melt-processing operations.

The process may also be carried out as a continuous process in a pressurized reactor. A continuous process is especially useful for the manufacture of fluorocarbon elastomers.

Polymerization as described herein employs free radical initiators capable of generating radicals under the conditions of polymerization. As is well known in the art, initiators for use in accordance with the invention are selected based on the type of fluoropolymer and the desired properties to be obtained, e.g., end group type, molecular weight. For some fluoropolymers such as melt-processible TFE copolymers, water-soluble salts of inorganic peracids are employed which produce anionic end groups in the polymer. Preferred initiators of this type have a relatively long half-life, preferably persulfate salts, e.g., ammonium persulfate or potassium persulfate. To shorten the half-life of persulfate initiators, reducing agents such as ammonium bisulfite or sodium metabisulfite, with or without metal catalyst salts such as Fe, can be used. Preferred persulfate initiators are substantially free of metal ions and most preferably are ammonium salts.

For the production of PTFE or modified PTFE dispersions for dispersion end uses, small amounts of short chain dicarboxylic acids such as succinic acid or initiators that produce succinic acid such as disuccinic acid peroxide (DSP) are typically also added in addition to the relatively long half-life initiators such as persulfate salts. Such short chain dicarboxylic acids are typically beneficial in reducing undispersed polymer (coagulum). For the production of PTFE dispersion for the manufacture of fine powder, a redox initiator system such as potassium permanganate/oxalic acid is often used.

The initiator is added to the aqueous polymerization medium in an amount sufficient to initiate and maintain the polymerization reaction at a desired reaction rate. At least a portion of the initiator is typically added at the beginning of the polymerization. A variety of modes of addition may be used including continuously throughout the polymerization, or in doses or intervals at predetermined times during the polymerization. In one mode of operation the initiator is precharged to the reactor and additional initiator is continuously fed into the reactor as the polymerization proceeds. Typically, total amounts of ammonium persulfate and/or potassium persulfate employed during the course of polymerization are 25 ppm to 250 ppm based on the weight of the aqueous medium. Other types of initiators, for example, potassium permanganate/oxalic acid initiators, can be employed in amounts and in accordance with procedures as known in the art.

Chain-transfer agents may be used in a process in accordance with the polymerization of some types of polymers, e.g., for melt-processible TFE copolymers, to decrease molecular weight for the purposes of controlling melt viscosity. Chain transfer agents useful for this purpose are well-known for use in the polymerization of fluorinated monomers. Typical chain transfer agents include hydrogen, aliphatic hydrocarbons, halocarbons, hydrohalocarbons or alcohol having 1 to 20 carbon atoms, more preferably 1 to 8 carbon atoms. Representative examples of such chain transfer agents are alkanes such as ethane, chloroform, 1,4-diiodoperfluorobutane and methanol.

The amount of a chain transfer agent and the mode of addition depend on the activity of the particular chain transfer agent and on the desired molecular weight of the polymer product. A variety of modes of addition may be used including a single addition before the start of polymerization, continuously throughout the polymerization, or in doses or intervals at predetermined times during the polymerization. The amount of chain train transfer agent supplied to the polymerization reactor is typically 0.005 to 5 wt%, more typically from 0.01 to 2 wt% based upon the weight of the resulting fluoropolymer.

### Test Methods and Chemicals

Comonomer content (PPVE) was measured by FTIR according to the method disclosed in U.S. Patent No. 4,743,658, col. 5, lines 9-23, and is reported as weight % in Table 1.

Particle size, i.e., raw dispersion particle size (RDPS), was determined by laser diffraction techniques that measure the particle size distributions (PSD) of materials using a Microtrac Ultrafine Particle Analyzer (UPA). The UPA uses dynamic light scattering principle for measuring PSD with size range of 0.003 micron to 6.54 micron. The samples are analyzed after collecting the background with water. The measurements are repeated three times and averaged.

R_{f}CH₂OH and HCF₂CF₂CF₂CF₂CH₂OH starting materials were purchased from Matrix Scientific, P.O. Box 25067, Columbia, SC, 29224-5067 USA, http://www.matrixscientific.com, and SynQuest Laboratories, Inc., P. O. Box 309, Alachua, FL, 32616-0309 USA, http://www.synquestlabs.com.

### EXAMPLES

### Example 1

### Preparation of CF₃CF₂CH₂OCF(CF₃)COOH.

To a round bottom flask was added NaH (5.2 g, 0.217 mol) and anhydrous THF (300 mL). Then the suspension was mechanically stirred while CF₃CF₂CH₂oH (24.0 g, 0.16 mol) was slowly added over 1 hour. After that hexafluoropropylene oxide (HFPO, 13.2 g, 0.080 mol) was slowly bubbled through the solution at room temperature with stirring. A solution of NaOH (4.0 g, 0.10 mol) in water (20 mL) was added to the reaction, and then the mixture was acidified by 0.5 M HCl in water (0.5 L). The organic phase was separated and the product was isolated by distillation (bp = 75 °C / 10 torr) to afford 17.7 g of colorless liquid (75% yield).

### Example 2

### Preparation of CF₃CF₂CF₂CH₂OCF(CF₃)COOH.

To a round bottom flask was added NaH (9.6 g, 0.40 mol) and anhydrous THF (400 mL). The suspension was mechanically stirred and CF₃CF₂CF₂CH₂OH (76.0 g, 0.38 mol) was slowly added over 1 hour. After that HFPO (30 g, 0.18 mol) was slowly bubbled through the solution at room temperature with stirring. A solution of NaOH (4.0 g, 0.10 mol) in water (20 mL) was added to the reaction, and then the mixture was acidified by 0.5 M HCl in water (1.5 L). The organic phase was separated and the product was isolated by distillation (bp = 40 °C / 0.1 torr) to afford 48 g of colorless liquid (77% yield).

### Example 3

### Preparation of CF₃CF₂CF₂CF₂CH₂OCF(CF₃)COOH.

To a round bottom flask was added NaH (8.4 g, 0.35 mol) and anhydrous THF (400 mL). The suspension was mechanically stirred and CF₃CF₂CF₂CF₂CH₂OH (75 g, 0.30 mol) was slowly added over 1 hour. After that HFPO (24.5 g, 0.148 mol) was slowly bubbled through the solution at room temperature with stirring. A solution of NaOH (10.0 g, 0.25 mol) in water (100 mL) is added to the reaction, and then the mixture was acidified by 1.0 M HCl in water (1.2 L). The organic phase was separated and the product was isolated by distillation (bp = 43 °C / 0.06 torr) to afford 40.4 g of colorless liquid (70% yield).

### Example 4

### Preparation of CF₃CF₂CF₂CF₂CF₂CH₂OCF(CF₃)COOH.

To a round bottom flask was added NaH (8.2 g, 0.34 mol) and anhydrous THF (400 mL). The suspension was mechanically stirred and CF₃CF₂CF₂CF₂CF₂CH₂OH (75.0 g, 0.25 mol) was slowly added over 1 hour. After that HFPO (19.8 g, 0.12 mol) was slowly bubbled through the solution at room temperature with stirring. A solution of NaOH (4.0 g, 0.10 mol) in water (20 mL) was added to the reaction, and then the mixture was acidified by 0.5 M HCl in water (1.5 L). The organic phase was separated and the product was isolated by distillation (bp = 67 °C / 0.06 torr) to afford 34.7 g of colorless liquid (66% yield).

### Example 5

### Preparation of HCF₂CF₂CF₂CF₂CH₂OCF(CF₃)COOH.

To a round bottom flask was added NaH (6.9 g, 0.288 mol) and anhydrous THF (400 mL). The suspension was mechanically stirred and HCF₂CF₂CF₂CF₂CH₂OH (58 g, 0.25 mol) was slowly added over 1 hour. After that HFPO (20.0 g, 0.120 mol) was slowly bubbled through the solution at room temperature with stirring. A solution of NaOH (6.0 g, 0.15 mol) in water (100 mL) was added to the reaction. Then the mixture was acidified by 1.0 M HCl in water (1.0 L). The organic phase was separated and the product was isolated by distillation (bp = 59 °C / 0.1 torr) to afford 31.4 g of colorless liquid (70% yield).

### Example 6

### Preparation of CF₃CF₂CF₂CF₂CH₂OCF(CF₃)COO NH₄.

To the acid CF₃CF₂CF₂CF₂CH₂OCF(CF₃)CO₂H from Example 3 (59.8 g, 0.152 mmol) suspended in water (200 mL) was slowly added a solution of ammonium bicarbonate (12.0 g, 0.152 mol) in water (75 mL), and the reaction mixture was stirred for 30 min. at room temperature. By evaporation of water the product, CF₃CF₂CF₂CF₂CH₂OCF(CF₃)CO₂ NH₄, was obtained as a white solid (62.0 g, 99% yield).

The ammonium salts of the carboxylic acids described in examples 1, 2, 4, and 5 were prepared in analogous manner by adding an equimolar amount of ammonium bicarbonate to the acid in water.

### Comparative Example 7

Deaerated water was used in the polymerizations. It was prepared by pumping deionized water into a large stainless steel vessel and vigorously bubbling nitrogen gas for approximately 30 minutes through the water to remove all oxygen.

Surfactant solution 1 consisted of 19 wt. % APFO (ammonium perfluorooctanoate, E.I. DuPont de Nemours & Co., Wilmington, DE, USA) in deionized water, and Initiator solution 1 consisted of 1.0 g ammonium persulfate (purchased from Sigma-Aldrich Corporation, St. Louis, MO, USA) in 1000 g deionized water.

The reactor was a 1 Liter vertical autoclave made of Inconel®, equipped with a three-bladed ribbon agitator and a baffle insert. No chain transfer agent was used in these Examples.

A vacuum of approximately -13 PSIG (11.7 kPa) was applied to the reactor. This was used to draw in a solution of 4.8 g Surfactant Solution 1 and 500 mL deaerated water as a precharge. The reactor was then purged three times (agitator = 100 RPM) by pressurization with nitrogen gas to 50 PSIG (450 kPa) followed by venting to 1 PSIG (108 kPa) to reduce oxygen content. It was further purged three times (agitator = 100 rpm) by pressurization with gaseous tetrafluoroethylene (TFE) to 25 PSIG (274 kPa) followed by venting to 1 PSIG (108 kPa) further insuring that the contents of the autoclave were free of oxygen. The agitator rate was increased to 600 RPM, the reactor was heated to 65 °C, and then perfluoro(propyl vinyl ether) (PPVE) (12.8 g) was pumped as a liquid into the reactor.

When at temperature, the reactor pressure was raised to a nominal 250 PSIG (1.83 MPa) by adding TFE (∼38 g). Initiator Solution 1 was fed to the reactor at a rate of 20 mL/min for 1 min. to provide a precharge of 0.02 g ammonium persulfate. It was then pumped at a rate of 0.25 mL/min. until the end of the batch which was defined as the point at which 90 g of TFE has been consumed, measured as mass loss in a TFE weigh tank.

At kickoff (defined as the point at which a 10 PSIG (70 kPa) pressure drop was observed) the polymerization was deemed to have been started, which was also the start point for feeding PPVE at a rate of 0.12 g / min. for the rest of the polymerization. The time needed to reach kickoff is essentially equivalent to the initiation time for the polymerization. Reactor pressure was kept constant at 250 PSIG (1.83 MPa) by feeding TFE as needed throughout the entire polymerization.

After 90 g of TFE has been consumed, the agitator was slowed to 200 RPM, all feeds to the reactor were shut off, and the contents were cooled to 30 °C over the course of 30 minutes. The agitator was then turned down to 100 RPM and the reactor was vented to atmospheric pressure. The run time needed to consume 90 g of TFE is inversely related to the polymerization rate, indicating that a faster polymerization rate results in a shorter run time.

The fluoropolymer dispersion thus produced has a solids content of typically around 15-16 wt. %.

The fluoropolymer dispersion was filtered through cheesecloth to remove any undispersed polymer (coagulum) produced by the polymerization. The filtered coagulum was placed in a small aluminum pan and dried in a vacuum oven for a minimum of 8 hours at 100 °C to remove excess water. The dried coagulum is reported in Table 1 as wt. % of the total isolated polymer solids.

Polymer was isolated from the filtered dispersion by freezing, thawing and filtration. The polymer was washed with deionized water and filtered several times before being dried overnight in a vacuum oven at 80 °C and a vacuum of 30 mm Hg (4 kPa). Results are reported in Table 1 as wt % solids of polymer in the filtered dispersion.

The results of two duplicate runs using APFO surfactant are reported in Table 1 as 7a and 7b.

### Example 8

Following the general procedure of Comparative Example 7, the reactor precharge is a surfactant solution as described below with no additional water. The surfactant solution was prepared by adding deionized water to 0.67 g of CF₃CF₂CH₂OCF(CF₃)COO NH₄ (Prepared from the acid of Example 1 following the procedure of Example 6) to give a final solution mass of 500.0 g. The results of two duplicate runs are reported in Table 1 as 8a and 8b.

### Example 9

Following the general procedure of Comparative Example 7, the reactor precharge is a surfactant solution as described below with no additional water. The surfactant solution was prepared by adding deionized water to 0.76 g of CF₃CF₂CF₂CH₂OCF(CF₃)COO NH₄ (Prepared from the acid of Example 2 following the procedure of Example 6) to give a final solution mass of 500.0 g. The results of three duplicate runs are reported in Table 1 as 9a, 9b, and 9c.

### Example 10

Following the general procedure of Comparative Example 7, the reactor precharge is a surfactant solution as described below with no additional water. The surfactant solution was prepared by adding deionized water to 0.88 g of CF₃CF₂CF₂CF₂CH₂OCF(CF₃)COO NH₄ from Example 6 to give a final solution mass of 500.0 g. The results of three duplicate runs are reported in Table 1 as 10a, 10b, and 10c.

### Example 11

Following the general procedure of Comparative Example 6, the reactor precharge is a surfactant solution as described below with no additional water. The surfactant solution was prepared by adding deionized water to 0.87 g of CF₃CF₂CF₂CF₂CF₂CH₂OCF(CF₃)COO NH₄ (Prepared from the acid of Example 4 following the procedure of Example 6) to give a final solution mass of 500.0 g. The results of two duplicate runs are reported in Table 1 as 11a and 11b.

### Comparative Example 12

Following the general procedure of Comparative Example 7, the reactor precharge is a surfactant solution as described below with no additional water. The surfactant solution was prepared by adding deionized water to 0.83 g of HCF₂CF₂CF₂CF₂CH₂OCF(CF₃)COO NH₄ (Prepared from the acid of Example 5 following the procedure of Example 6) to give a final solution mass of 500.0 g. The results of two duplicate runs are reported in Table 1 as 12a and 12b.

It can be seen that the branched fluoroether compounds of Examples 8-11 give results similar to the standard APFO surfactant in terms of PPVE comonomer content, initiation rate, polymerization rate, and % solids in the final dispersion. In comparing Example 10 and Comparative Example 12 it can be seen that a polymerization with a surfactant having a CF₃- end group has a shorter initiation time, a faster polymerization rate, and a lower raw dispersion particle size (RDPS) than a polymerization using a surfactant with a HCF₂- end group in place of the CF₃- end group.

**Table 1. Copolymerization of TFE and PPVE**

| Example | | Surfactant Amount (g) | Surfactant Amount (mmol) | Kickoff Time (min) | Run Time (min) | RDPS (nm) | Solids in dispersion (wt. %) | Dried Coag (wt %) | PPVE (wt. %) |
|---|---|---|---|---|---|---|---|---|---|
| Comp 7a | APFO | 0.96 | 223 | 12 | 71 | 137 | 16.1 | 1.8 | 4.4 |
| Comp 7b | APFO | 0.96 | 223 | 10 | 92 | 136 | 16.4 | 1.8 | 5.7 |
| 8a | CF₃CF₂CH₂OCF(CF₃)COO NH₄ | 067 | 2 14 | 11 | 102 | 216 | 11.8 | 23.3 | 3.8 |
| 8b | CF₃CF₂CH₂OCF(CF₃)COO NH₄ | 0.67 | 2.14 | 14 | 99 | 210 | 13.3 | 13.5 | 3.7 |
| 9a | CF₃CF₂CF₂CH₂OCF(CF₃)COO NH₄ | 0.76 | 2.11 | 14 | 101 | 178 | 15.6 | 4.9 | 4.4 |
| 9b | CF₃CF₂CF₂CH₂OCF(CF₃)COO NH₄ | 0.76 | 2.11 | 13 | 102 | 180 | 15.5 | 5.6 | 4.2 |
| 9c | CF₃CF₂CF₂CH₂OCF(CF₃)COO NH₄ | 0.76 | 2.11 | 11 | 104 | 179 | 15.4 | 7.9 | 4.3 |
| 10a | CF₃CF₂CF₂CF₂CH₂OCF(CF₃)COO NH₄ | 0.88 | 2 14 | 15 | 104 | 149 | 14.0 | 5.7 | 4.4 |
| 10b | CF₃CF₂CF₂CF₂CH₂OCF(CF₃)COO NH₄ | 0.88 | 214 | 18 | 106 | 147 | 16.2 | 1.3 | 5.1 |
| 10c | CF₃CF₂CF₂CF₂CH₂OCF(CF₃)COO NH₄ | 0.88 | 2 14 | 16 | 107 | 149 | 16.1 | 1.4 | 4.5 |
| 11a | CF₃CF₂CF₂CF₂CF₂CH₂OCF(CF₃)COO NH₄ | 0.97 | 2.11 | 10 | 114 | 149 | 16.3 | 3.3 | 5.7 |
| 11b | CF₃CF₂CF₂CF₂CF₂CH₂OCF(CF₃)COO NH₄ | 0.97 | 2.11 | 9 | 99 | 148 | 15.9 | 2.8 | 5.8 |
| Comp 12a | HCF₂CF₂CF₂CF₂CH₂OCF(CF3)COO NH₄ | 083 | 2.11 | 26 | 118 | 181 | 15.4 | 2.1 | 5.1 |
| Comp. 12b | HCF₂CF₂CF₂CF₂CH₂OCF(CF₃)COO NH₄ | 0.83 | 2.11 | 24 | 128 | 179 | 15.5 | 2.7 | 5.5 |

## Claims

1. A process comprising the step of polymerizing at least one fluorinated monomer in an aqueous medium containing initiator and fluorosurfactant, said fluorosurfactant comprising a compound of Formula (I)
R_{f}CH₂OCF(CF₃)C(O)OM (I)
wherein R_{f} is a linear or branched perfluoroalkyl group with 2 to 5 carbon atoms, and M is H, NH₄, Li, Na, or K.

2. The process of claim 1 wherein R_{f} is a linear perfluoroalkyl group with 2 to 5 carbon atoms, and M is H, NH₄, Li, Na, or K.

3. The process of claim 1 wherein R_{f} is a linear perfluoroalkyl group with 3 to 5 carbon atoms, and M is H, NH₄.

4. The process of claim 1 wherein said polymerizing produces an aqueous dispersion of particles of fluoropolymer having a fluoropolymer solids content of at least 10 wt%.

5. The process of claim 1 wherein said fluorinated monomer is selected from the group consisting of tetrafluoroethylene, hexafluoropropylene, chlorotrifluoroethylene, trifluoroethylene, hexafluoroisobutylene, perfluoroalkyl ethylenes, fluorovinyl ethers, vinyl fluoride, vinylidene fluoride, perfluoro-2,2-dimethyl-1,3-dioxole, perfluoro-2-methylene-4-methyl-1,3-dioxolane, perfluoro(allyl vinyl ether) and perfluoro(butenyl vinyl ether).

6. The process of claim 1 wherein said fluorinated monomer is tetrafluoroethylene.

7. The process of claim 1 wherein said fluorinated monomer is tetrafluoroethylene and at least one additional monomer.

8. The process of claim 1 wherein said fluorinated monomer are tetrafluoroethylene and perfluoro(propyl vinyl ether).

9. The process of claim 1 wherein said polymerizing produces less than 25 wt% undispersed fluoropolymer based on the total weight of fluoropolymer produced.

10. The process of claim 1 wherein said polymerizing produces less than 10 wt% undispersed fluoropolymer based on the total weight of fluoropolymer produced.

## Patentansprüche

1. Verfahren umfassend den Schritt des Polymerisierens mindestens eines fluorierten Monomers in einem wässrigen Medium, das Initiator und Fluortensid enthält, wobei das Fluortensid eine Verbindung der Formel (I)
R_{f}CH₂OCF(CF₃)C(O)OM (I)
umfasst, wobei R_{f} eine lineare oder verzweigte Perfluoralkylgruppe mit 2 bis 5 Kohlenstoffatomen ist und M H, NH₄, Li, Na oder K ist.

2. Verfahren nach Anspruch 1, wobei R_{f} eine lineare Perfluoralkylgruppe mit 2 bis 5 Kohlenstoffatomen ist und M H, NH₄, Li, Na oder K ist.

3. Verfahren nach Anspruch 1, wobei R_{f} eine lineare Perfluoralkylgruppe mit 3 bis 5 Kohlenstoffatomen ist und M H, NH₄ ist.

4. Verfahren nach Anspruch 1, wobei das Polymerisieren eine wässrige Dispersion von Teilchen von Fluorpolymer herstellt, das einen Fluorpolymerfeststoffgehalt von mindestens 10 Gew.-% aufweist.

5. Verfahren nach Anspruch 1, wobei das fluorierte Monomer aus der Gruppe ausgewählt ist bestehend aus Tetrafluorethylen, Hexafluorpropylen, Chlortrifluorethylen, Trifluorethylen, Hexafluorisobutylen, Perfluoralkylethylenen, Fluorvinylethern, Vinylfluorid, Vinylidenfluorid, Perfluor-2,2-dimethyl-1,3-dioxol, Perfluor-2-methylen-4-methyl-1,3-dioxolan, Perfluor(allylvinylether) und Perfluor(butenylvinylether).

6. Verfahren nach Anspruch 1, wobei das fluorierte Monomer Tetrafluorethylen ist.

7. Verfahren nach Anspruch 1, wobei das fluorierte Monomer Tetrafluorethylen und mindestens ein zusätzliches Monomer ist.

8. Verfahren nach Anspruch 1, wobei das fluorierte Monomer Tetrafluorethylen und Perfluor(propylvinylether) ist.

9. Verfahren nach Anspruch 1, wobei das Polymerisieren weniger als 25 Gew.-% undispergiertes Fluorpolymer, auf das Gesamtgewicht des hergestellten Fluorpolymers bezogen, herstellt.

10. Verfahren nach Anspruch 1, wobei das Polymerisieren weniger als 10 Gew.-% undispergiertes Fluorpolymer, auf das Gesamtgewicht des hergestellten Fluorpolymers bezogen, herstellt.

## Revendications

1. Procédé comprenant l'étape de polymérisation d'au moins un monomère fluoré dans un milieu aqueux contenant un initiateur et un tensioactif fluoré, ledit tensioactif fluoré comprenant un composé de formule (I)
R_{f}CH₂OCF(CF₃)C(O)OM (I)
dans laquelle R_{f} est un groupe alkyle perfluoré linéaire ou ramifié avec 2 à 5 atomes de carbone, et M est H, NH₄, Li, Na ou K.

2. Procédé selon la revendication 1, dans lequel R_{f} est un groupe alkyle perfluoré linéaire avec 2 à 5 atomes de carbone, et M est H, NH₄, Li, Na ou K.

3. Procédé selon la revendication 1, dans lequel R_{f} est un groupe alkyle perfluoré linéaire avec 3 à 5 atomes de carbone, et M est H, NH₄.

4. Procédé selon la revendication 1, dans lequel ladite polymérisation produit une dispersion aqueuse de particules de polymère fluoré ayant une teneur en matières solides de polymère fluoré d'au moins 10 % en pds.

5. Procédé selon la revendication 1, dans lequel ledit monomère fluoré est sélectionné parmi le groupe constitué du tétrafluoroéthylène, de l'hexafluoropropylène, du chlorotrifluoroéthylène, du trifluoroéthylène, de l'hexafluoroisobutylène, des perfluoroalkyl éthylènes, des éthers fluorovinyliques, du fluorure de vinyle, du fluorure de vinylidène, du perfluoro-2,2-diméthyl-1,3-dioxole, du perfluoro-2-méthylène-4-méthyl-1,3-dioxolane, du perfluoro(éther d'allyl vinyle) et du perfluoro(éther de butényl vinyle).

6. Procédé selon la revendication 1, dans lequel ledit monomère fluoré est le tétrafluoroéthylène.

7. Procédé selon la revendication 1, dans lequel ledit monomère fluoré est le tétrafluoroéthylène et au moins un monomère supplémentaire.

8. Procédé selon la revendication 1, dans lequel ledit monomère fluoré est le tétrafluoroéthylène et le perfluoro(éther de propyl vinyle).

9. Procédé selon la revendication 1, dans lequel ladite polymérisation produit moins de 25 % en pds de polymère fluoré non dispersé sur la base du poids total du polymère fluoré produit.

10. Procédé selon la revendication 1, dans lequel ladite polymérisation produit moins de 10 % en pds de polymère fluoré non dispersé sur la base du poids total du polymère fluoré produit.
